# EUROPÄISCHE PATENTSCHRIFT

(11) **EP 1 806 301 B1**
(45) Veröffentlichungstag und Bekanntmachung des Hinweises auf die Patenterteilung: **19.10.2011**
(21) Anmeldenummer: 06000203.7
(22) Anmeldetag: 05.01.2006
(51) Int. Cl.: B65G 1/04

(54) **Vorrichtung zum Verlagern von Waren**
Article transfer device
Dispositif de transfert d'articles

(43) Veröffentlichungstag der Anmeldung: 11.07.2007
(73) Patentinhaber: von Liechtenstein, Alexander, 9497 Triesenberg (LI)
(72) Erfinder: von Liechtenstein, Alexander, 9497 Triesenberg (LI)
(74) Vertreter: Grünecker, Kinkeldey, Stockmair & Schwanhäusser

(56) Entgegenhaltungen:
- DE-A1- 2 908 027
- DE-U1- 8 518 322
- DE-U1- 20 107 329
- FR-A- 2 419 244
- FR-A- 2 643 346
- FR-A- 2 851 646
- US-A- 3 674 159

## Beschreibung

Die vorliegende Erfindung bezieht sich auf eine Vorrichtung zum Verlagern von Waren gemäß dem Oberbegriff des Anspruchs 1.

Solche Vorrichtungen sind aus der Praxis vor allem zum Betrieb von automatisierten Lagersystemen bekannt, wo sie die Funktion des Ein-, Um- oder Auslagerns übernehmen. Das Lagersystem selbst kann dabei beispielsweise nach Art eines Hochregallagers aufgebaut sein.

Herkömmliche Vorrichtungen zum Verlagern von Waren verbinden üblicherweise zwei Funktionen: Sie können eine Ware fassen bzw. fixieren, und sie können diese Ware dann verlagern. Zum Ertassen bzw. Fixieren einer Ware können Greifer und/oder Ansaugeinrichtungen vorgesehen sein. Ist eine Ware vor oder an einem Kopf einer Verlagerungsvorrichtung fixiert, so wird der Vorrichtungskopf verfahren, um die Ware zu verlagern. Zu diesem Zweck ist der Vorrichtungskopf mit einem Antrieb versehen und mit einem Element dieses Antriebs verbunden. Aus der Praxis sind dazu zwei unterschiedliche Varianten bekannt: Bei der einen Variante ist der Kopf der Verlagerungsvorrichtung an einer festen Stange montiert, die entlang einer Schiene verfahren werden kann. Bei der Stange handelt es sich somit um ein starres Antriebselement. Bei einer anderen herkömmlichen Venagerungsvorrichtung ist als Antriebselement für den Vorrichtungskopf eine Energiekette vorgesehen, die aus einer Reihe starrer Glieder zusammengesetzt ist. Die Glieder sind untereinander über Gelenke verbunden. Um ein Durchknicken dieser Energiekette zu verhindern, muss dann jedoch der Vorrichtungskopf auf einer Tischfläche gleitend geführt sein. Dies beeinträchtigt die Effizienz der Verlagerungsvorrichtung, weil zwischen dem Tisch und dem Vorrichtungskopf Reibung entsteht und weil ein Loslösen des Vorrichtungskopfes vom Tisch unmöglich ist.

Die Druckschrift FR-A-2 419 244 beschreibt einen Manipulator zum Schieben von Gegenständen. Ein Kopf des Manipulators ist an einem flachen Metallband befestigt. Das Metallband wird von einer Aufwickelvorrichtung abgerollt. Durch eine Führung über eine konvexe Rolle und eine konkave Gegenrolle erhält es in seiner Querrichtung eine Krümmung, die ihm eine hohe Stabilität verleimen soll.

Das Dokument DE 29 08 027 bezieht sich auf eine Verteilereinrichtung für Waren. Ein Ausstoßorgan besteht aus einem Metallband mit gebogenem Profil, das zwischen einer Antriebsrolle und einer Anpressrolle hindurchläuft.

Das Dokument FR-A-2 643 346 beschreibt einen weiteren Ausstoß-Manipulator mit einem Kopf, der an einem gekrümmten Metallband befestigt ist. Durch Verfahren des Kopfes des Manipulators kann ein Gegenstand von einem ersten Transportband auf ein zweites Transportband verschoben werden.

Aufgabe der vorliegenden Erfindung ist es, die bekannte Verlagerungsvorrichtung mit konstruktiv möglichst einfachen Mitteln dahingehend zu verbessern, dass sie in ihrer Funktionalität und Effizienz gesteigert wird.

Diese Aufgabe wird gelöst durch eine Vorrichtung mit den Merkmalen des Anspruchs 1.

Bei der erfindungsgemäßen Vorrichtung zum Verlagern von Waren ist der Vorrichtungskopf mit einem gelenklosen, zumindest abschnittsweise flexiblen Antriebselement verbunden. Auf Grund seiner Flexibilität kann das Antriebselement aufwickelbar sein. Dies hat den Vorteil, dass es in einem sehr kleinen Volumen gespeichert werden kann, so dass ein umso größeres Volumen für das Lagern von Waren zur Verfügung gestellt werden kann. Gleichzeitig führt die Gelenklosigkeit des Antriebselementes dazu, dass es im Vergleich zur herkömmlichen Energiekette deutlich einfacher aufgebaut und wegen des Wegfalls der Gelenkverbindungen weitaus weniger störanfällig ist. Dies verringert den Wartungsaufwand und erhöht umgekehrt die Effizienz des damit versorgten Lagersystems. Das Führen des Antriebselementes zwischen den beiden Rollen sorgt für eine hohe Richtungsstabilität.

Vorzugsweise ist das Antriebselement an einer Befestigungseinrichtung befestigt, und eine Arbeitslänge des Antriebselements zwischen der Befestigungseinrichtung und dem Vorrichtungskopf ist veränderbar, d.h. verkürzbar und/oder verlängerbar. Dies hat den Vorteil, dass die Verlagerungsvorrichtung zu jedem Zeitpunkt nur die jeweils aktuell benötigte Arbeitslänge des Antriebselementes zur Verfügung stellen muss. Sobald dies möglich ist, kann die Arbeitslänge des Antriebselements anschließend wieder bis auf ein Minimum verkürzt werden. Auf diese Weise wird der Raumbedarf der Verlagerungsvorrichtung erheblich vermindert.

Zweckmäßig ist es, wenn das Antriebselement ein flexibles Band ist, da ein solches Band besonders raumsparend aufgewickelt werden kann.

Besonders günstig ist es dabei, wenn das flexible Band ein Metallband ist. Ohne die Aufwickeleigenschaften zu beeinträchtigen, wird dem Band damit eine erhebliche Stabilität verliehen, mittels derer der Vorrichtungskopf sehr richtungsstabil bewegt werden kann. Statt eines Metalles kann für das Band selbstverständlich auch ein anderer Werkstoff verwendet werden, der entsprechende Flexibilitäts- und Stabilitätseigenschaften aufweist.

Wird jedoch als Material für das Band ein Metall gewählt, so kann das Band beispielsweise als Stahlband ausgebildet sein, insbesondere unter Verwendung eines rostfreien Stahls.

Vorzugsweise ist das als Antriebselement vorgesehene flexible Band weniger hoch als breit. Dies verbessert seine Stabilität, während es gleichzeitig in einem kleinen Volumen aufgewickelt werden kann.
Um das Aufwickeln zu bewirken, ist eine Aufwickelvorrichtung für das Antriebselement vorzugsweise in Verbindung mit der Befestigungseinrichtung vorgesehen.

In einer vorteilhaften Variante der Erfindung ist das Band an seinem Montageort am Vorrichtungskopf in seiner Querrichtung gekrümmt. Diese Krümmung verleiht dem Band eine erhebliche Richtungsstabilität, da sich das Band wegen der Krümmung in seiner Längsrichtung nicht mehr oder kaum noch durchbiegen kann. Auch die Seitenstabilität des Bandes wird auf diese Weise verbessert.

Vorzugsweise ist die Rolle konvex und die Gegenrolle konkav. Bei Ausbildung des Antriebselements als flexibles Band kann so die bereits erwähnte Krümmung des Bandes in seiner Querrichtung hervorgerufen werden.

Um die Richtungsstabilität noch weiter zu verbessern, können in Längsrichtung des Antriebselementes nacheinander zwei Rollen mit je einer zugeordneten Gegenrolle vorgesehen sein.

Denkbar ist es, dass die Bewegung mindestens einer Rolle und einer weiteren Rolle und/oder einer Gegenrolle miteinander gekoppelt ist. Sind eine Rolle und eine ihr zugeordnete Gegenrolle miteinander gekoppelt, so verhindert dies, dass eine Seite des Antriebselementes weiter bewegt wird als die andere Seite, wodurch das Antriebselement auf unerwünschte Weise abgelenkt werden könnte. Sind zwei Rollen oder zwei Gegenrollen in ihrer Bewegung miteinander gekoppelt, so wird ein Reibungsverluste hervorrufendes Spiel entlang des Antriebelementes vermieden.

Wenn wenigstens eine Rolle und/oder eine Gegenrolle mit einem in zwei Richtungen betreibbaren Antrieb versehen ist, bietet dies die Möglichkeit, den Kopf der Veriagerungsvorrichtung vor und zurück zu bewegen, ohne dass die Bewegung in einer Richtung beispielsweise mittels eines Vorspannelementes bewirkt werden muss. Durch die hier vorgesehene Möglichkeit zum "aktiven" Antreiben des Antriebselementes in beiden Richtungen kann das Antriebselement schneller und präziser bewegt werden.

Als zweckmäßig hat es sich erwiesen, wenn die Rolle und/oder die Gegenrolle eine Oberfläche aus einer Reibung zwischen der Rolle oder Gegenrolle und dem Antriebselement hervorrufendem Material aufweist, beispielsweise aus Gummi. Dies verhindert einen Schlupf zwischen der Rolle und dem Antriebselement, so dass die Position des Antriebselementes und damit auch die Position der zu verlagernden Ware präziser ermittelt werden können. Zudem kann das Antriebselement schneller beschleunigt oder abgebremst werden.

Denkbar wäre es, dass der Vorrichtungskopf eine ebene oder konkave Anlagefläche für das Anlegen einer Ware aufweist. Ebene Anlageflächen würden sich eher für Waren mit ebenen Seitenwänden eignen, während eine konkave Anlagefläche besonders gut für Waren mit konvexen Außenseiten geeignet wäre.

Am Vorrichtungskopf können eine oder mehrere Saugöffnungen vorgesehen sein, die insbesondere in Form von über dem Vorrichtungskopf hinaus vorstehenden Saugnäpfen ausgebildet sein können. An oder vor den Saugöffnungen kann ein Unterdruck erzeugt werden, mittels dessen die Ware vor dem Kopf der Vorrichtung temporär fixiert werden kann.

Vorteilhaft ist es dabei, wenn die Ränder der Saugnäpfe in einer gemeinsamen Ebene liegen. Hat die zu verlagernde Ware eine ebene Seitenwand, so kann sich die Ware besonders gut an die in einer ebene liegenden Saugnäpfe anlagern.

Günstigerweise ist ein Ende einer für das Ansaugen vorgesehenen Luftleitung mit dem Vorrichtungskopf verbunden und wird bei dessen Bewegung mitgeführt. Dadurch entfällt die Notwendigkeit, für die Luftleitung einen eigenen Antrieb vorzusehen.

In einer vorteilhaften Variante der Erfindung ist die Luftleitung flexibel. Dies erlaubt es, die Luftleitung an die sich ändernde Arbeitslänge des Antriebselementes anzupassen. Der jeweils überschüssige Abschnitt der Luftleitung kann auf Grund ihrer Flexibilität aufgerollt oder aufgewickelt werden und benötigt in diesem Zustand nur noch einen sehr geringen Vorratsraum.

Im Folgenden wird ein bevorzugtes Ausführungsbeispiel einer erfindungsgemäßen Vorrichtung anhand der beigefügten Zeichnungen näher beschrieben. Im Einzelnen zeigen
- Fig. 1: eine Draufsicht auf ein Ausführungsbeispiel einer erfindungsgemäßen Vorrichtung zum Verlagern von Waren,
- Fig. 2: einen Horizontalschnitt durch die erfindungsgemäße Vorrichtung,
- Fig. 3: einen Vertikalschnitt durch die Vorrichtung in der in Fig. 2 mit III-III bezeichneten Ebene, und
- Fig. 4: eine schematische Seitenansicht der Vorrichtung.

Gleiche Komponenten werden in den Figuren durchgängig mit gleichen Bezugszeichen bezeichnet.

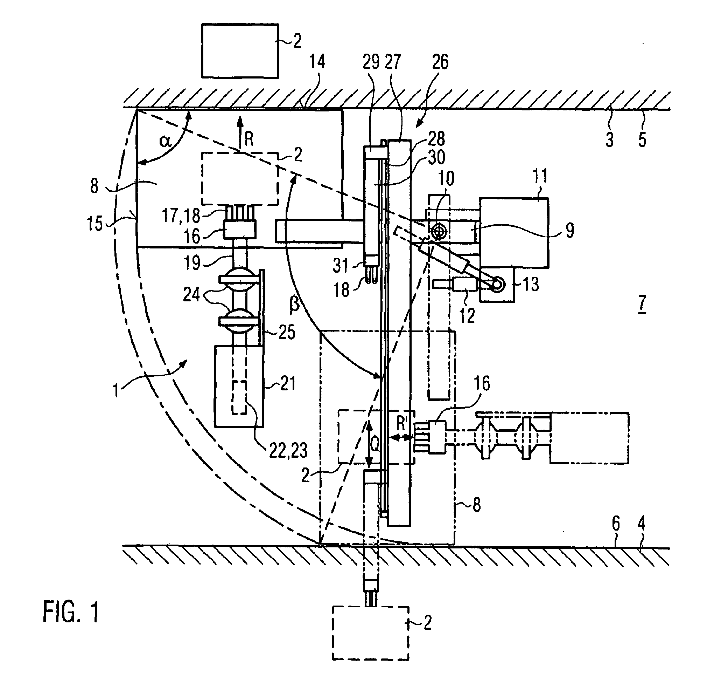

Fig. 1 zeigt ein bevorzugtes Ausführungsbeispiel einer erfindungsgemäßen Vorrichtung 1 zum Verlagern von Waren 2 in einem Lagersystem. Das Lagersystem umfasst zumindest eine erste Lagerfläche 3 und eine zweite Lagerfläche 4, auf denen Waren 2 abgelegt und gelagert werden können. Exemplarisch ist hier eine quaderförmige Ware 2 dargestellt, beispielsweise eine quaderförmige Verpackung, die auf der ersten Lagerfläche 3 abgelegt ist. Die erste Lagerfläche 3 hat eine Lagerflächenflanke 5; die zweite Lagerfläche 4 hat eine entsprechende Lagerflächenflanke 6. Die beiden Lagerflächen 3, 4 sind auf derselben vertikalen Höhe angeordnet, und ihre Flanken 5, 6 sind beabstandet und parallel zueinander angeordnet. Auf diese Weise formen sie zwischen sich einen Gang 7. Denkbar ist es, dass eine Vielzahl solcher Lagerflächen 3, 4 vertikal übereinander angeordnet sind. Gegebenenfalls könnte mindestens eine dieser Lagerflächen 3, 4 auch durch ein Fördermittel ersetzt sein, beispielsweise ein Förderband, mittels dessen Waren transportiert werden können.

lm Gang 7 befindet sich eine erfindungsgemäße Verlagerungsvorrichtung (bzw. Verlagerungseinrichtung) 1 zum Verlagern von Waren 2, insbesondere also zum Ein-, Aus- oder Umlagern von Waren 2 im Lagersystem. Über nicht dargestellte Mittel ist die Verlagerungsvorrichtung 1 so an einen Schwenktisch 8 gekoppelt, dass sie an dessen Bewegung teilnimmt. Dieser Schwenktisch 8 ist über einen Schwenkarm 9 um eine Schwenkachse 10 gegenüber einem Vertikalträger 11 schwenkbar. Der Vertikalträger 11 ist in Längsrichtung des Ganges 7 in diesem verfahrbar, so dass der Schwenktisch 8 jede Position in Längsrichtung der beiden Lagerflächen 3, 4 ansteuern kann. Sind mehrere Lagerflächen übereinander vorgesehen, so kann der Schwenktisch 8 auch in Längsrichtung des Vertikalträgers 11, d.h. in vertikaler Richtung, gegenüber letzterem verfahren werden, um die unterschiedlichen Lagerebenen ansteuern zu können.

Das Schwenken des Schwenktisches 8 gegenüber dem Vertikalträger 11 wird durch eine Teleskopmechanik 12 bewirkt, die auf der einen Seite an einem Ausleger 13 des Vertikalträgers 11 und auf der anderen Seite am Schwenkarm 9 des Schwenktisches 8 befestigt ist. Ein Verkürzen oder Verlängern der Teleskopmechanik 12 bewirkt ein Verschwenken des Tisches 8 um die Schwenkachse 10.

In Fig. 1 ist der Schwenktisch 8 in durchgezogenen Linien in einer ersten Endstellung dargestellt, in der er mit einer ersten Tischkante 14 fast bündig an der ersten Lagerflächenflanke 5 anliegt. Um die Schwenkachse 10 kann der Tisch 3 über einen maximalen Schwenkwinkel von β = 90° in seine gestrichelt dargestellte, zweite Endstellung verschwenken, in der er mit einer zweiten Tischkante 15 (fast) bündig an der Flanke 6 der zweiten Lagerfläche 4 anliegt. Allgemeiner ausgedrückt: der Winkel α zwischen den beiden Tischkanten 14, 15 entspricht dem Schwenkwinkel β. Diese beiden Winkel α, β müssen keine rechten Winkel sein, sondern können auch beliebige andere Werte annehmen.

Die Vorrichtung 1 zum Verlagern von Waren 2 umfasst einen Vorrichtungskopf 16, der zwei verschiedene Funktion ausführen kann: Zum einen kann er eine Ware 2 temporär vor sich fixieren, zum anderen kann er diese Ware 2 in einer Verlagerungsrichtung R oder in umgekehrter Richtung -R verlagern. Für den ersteren Zweck, d.h. zum temporären Fixieren einer Ware 2, weist die Vorrichtung 1 an ihrem Vorrichtungskopf 16 ein Fixierelement 17 auf. Dabei kann es sich um einen Greifer handeln. Bei der in Fig.1 gezeigten Vorrichtung 1 handelt es sich bei dem Fixierelement 17 jedoch um auf einer Vorderseite des Vorrichtungskopfes 16 hervorstehende Saugöffnungen bzw. Saugnäpfe 18. An diesen kann ein Unterdruck erzeugt werden, mittels dessen die Ware 2 angesaugt und vor den Saugöffnungen 18 gehalten wird.

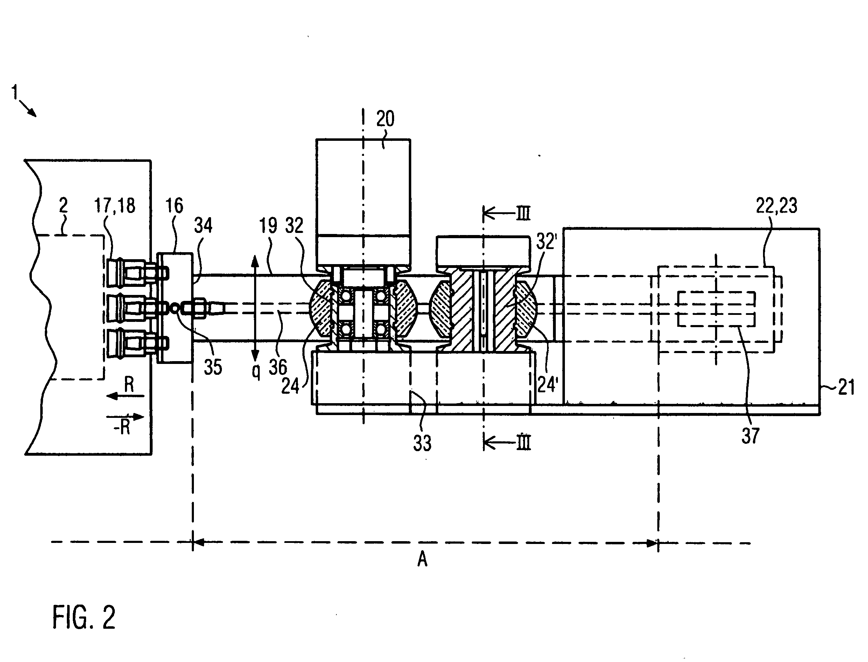

Um die zweite Funktion erfüllen zu können, nämlich das Verlagern der Ware 2 zu bewirken, ist der Vorrichtungskopf 16 mit einem beweglichen Antriebselement 19 verbunden. Ein Antrieb 20 (siehe Fig. 2), beispielsweise ein Motor, ist zum Bewegen des Antriebselementes 19 und des damit verbundenen Vorrichtungskopfes 16 vorgesehen. Im dargestellten Ausführungsbeispiel ist das Antriebselement 19 ein flexibles Stahlband, das weniger hoch als breit ist. In einem außerhalb der Tischfläche gelegenen Gehäuse 21 ist das als Stahlband ausgebildete Antriebselement 19 an einer Befestigungseinrichtung 22 befestigt. Diese Befestigungseinrichtung 22 kann als Trommel ausgebildet sein, die gleichzeitig als Aufwickelvorrichtung 23 zum Aufwickeln des Antriebselementes dient. Außerhalb des Gehäuses 21 ist das Band 19 über zwei Rollen 24 mit konvexer Oberfläche geführt, die über einen Rollenhalter 25 drehbar, aber ortsfest gegenüber dem Gehäuse 21 gehalten sind. Weitere Einzelheiten hinsichtlich der Verlagerungsvorrichtung 1 werden später anhand von Fig. 2 erläutert werden. In der Richtung R kann die Vorrichtung 1 eine Ware 2 vom Tisch 8 auf die Lagerfläche 3 verlagern, in Richtung -R kann sie die Ware 2 von der Lagerfläche 3 auf den Tisch 8 ziehen.

Wenn der Schwenktisch 8 von seiner ersten Endposition um 90° in seine zweite Endposition verschwenkt wird, so ändert sich wegen der Kopplung der Verlagerungsvorrichtung 1 an den Schwenktisch 8 auch die Verlagerungsrichtung dieser Vorrichtung 1 von R zu R'. Um eine Ware 2 in dieser zweiten Endstellung des Schwenktisches 8 in einer senkrecht zur Richtung R' stehenden Verlagerungsrichtung Q verlagern zu können, ist eine weitere Verlagerungseinrichtung 26 vorgesehen. Im Gegensatz zur Vorrichtung 1 nimmt die zweite Verlagerungseinrichtung 26 nicht an der Schwenkbewegung des Tisches 8 teil. Nichts desto trotz ist die zweite Verlagerungseinrichtung 26 an die Horizontalbewegung des Vertikalträgers 11 und an die Vertikalbewegung des Tisches 8 gegenüber dem Vertikalträger 11 gekoppelt.

Die zweite Verlagerungseinrichtung 26 verfügt über einen Horizontalträger 27. Parallel zu dem Horizontalträger 27 ist an ihm eine Schiene 28 befestigt, die auch als einfache Stange ausgebildet sein kann. Ein Reiter 29 ist entlang der Längsrichtung der Schiene 28 beweglich. An dem Reiter 29 ist wiederum ein Arm 30 befestigt, der an seinem vorderen Ende einen Kopf 31 der zweiten Verlagerungseinrichtung 26 trägt. Dieser Kopf 31 ist ähnlich aufgebaut wie der Kopf 16 der ersten Verlagerungsvorrichtung 1. Auch der Einrichtungskopf 31 verfügt über Saugöffnungen 18, an denen durch eine (nicht dargestellte) Pneumatik ein Unterdruck hergestellt werden kann.

Die Verlagerungsrichtung Q, in der die zweite Verlagerungseinrichtung 26 wirksam ist, ist parallel zu der Schiene 28 und zum Horizontalträger 27 und wird daher durch die Ausrichtung dieser beiden Elemente bestimmt. In der ersten Endstellung des Tisches 8 führt die Verlagerungsrichtung Q der zweiten Verlagerungseinrichtung 26 nicht über den Tisch 8, so dass die Verlagerungseinrichtung 26 in dieser Position nicht zum Verlagern von Waren dienen kann. In der strichliert dargestellten zweiten Endstellung des Tisches 8 führt die Verlagerungsrichtung Q der zweiten Verlagerungseinrichtung 26 jedoch genau über den Tisch 8. Dort kreuzt sie sich im rechten Winkel mit der Verlagerungsrichtung R' der erfindungsgemäßen Verlagerungsvorrichtung 1, die an der Schwenkbewegung des Tisches 8 teilgenommen hat.

In der zweiten Verlagerungsrichtung Q kann die zweite Verlagerungseinrichtung 26 soweit verschoben werden, dass eine vor ihrem Kopf 31 befindliche Ware 2 auf die zweite Lagerfläche 4 geschoben oder dort ergriffen und zurück auf den Tisch 8 gezogen werden kann.

Fig. 2 zeigt die wichtigsten Bestandteile der in Fig. 1 gezeigten, erfindungsgemäßen Vorrichtung 1 zum Verlagern von Waren 2. Das als Stahlband ausgebildete Antriebselement 19 ist mit seinem einen Ende am Vorrichtungskopf 16 und mit seinem anderen Ende an einer als Aufwickeltrommel ausgebildeten Befestigungseinrichtung 22 befestigt. Die Befestigungs- und Aufwickelvorrichtung 22, 23 ist innerhalb eines Gehäuses 21 aufgenommen.

Um den Kopf 16 der Verlagerungsvorrichtung 1 in Richtung R vom Gehäuse 21 weg oder in Richtung -R auf das Gehäuse zu bewegen zu können, ist eine Arbeitslänge A des Antriebselementes 19 zwischen dem Vorrichtungskopf 16 und der Befestigungsvorrichtung 22 durch das Abwickeln des Antriebelementes 19 von der Aufwickelvorrichtung 23 verlängerbar bzw. durch das Aufwickeln des Antriebselementes 19 auf die Aufwickelvorrichtung 23 verkürzbar. Zu diesem Zweck kann ein Antrieb oder Motor 20 unmittelbar mit der Aufwickelvorrichtung 23 zusammenwirken. Im vorliegenden Ausführungsbeispiel hingegen ist der Antrieb 20 direkt wirkungsverbunden mit einer ersten Rolle 24, über die das Antriebselement 19 außerhalb des Gehäuses 21 geführt ist. Die Rolle 24 ist auf eine als Hohlzylinder ausgebildete Drehachse 32 aufgesetzt, die mittels des Antriebes 20 in Drehung versetzt werden kann. Die Oberfläche der Rolle 24 ist mit einem eine Haftreibung zwischen der Rolle 24 und dem Band 19 hervorrufenden bzw. steigernden Material versehen, beispielsweise einem gummiartigen Material. Die Oberfläche der Rolle 24 ist zudem konvex gekrümmt, um dem Band 29 in seinem Verlauf zwischen der Rolle 24 und dem Vorrichtungskopf 16 in seiner Querrichtung q eine Krümmung zu verleihen.

Auf der vom Antrieb 20 abgewandten Seite der Rolle 24 überträgt ein Treibriemen 33 die Rotationsbewegung der Drehachse 32 der ersten Rolle 24 auf eine Drehachse 32' einer zweiten Rolle 24'. Auf diese Weise sind die Rotationsbewegungen der beiden Rollen 24, 24' stets miteinander gekoppelt. Auch die Oberfläche der zweiten Rolle 24' ist mit einem reibungserhöhenden Material versehen und hat eine konvexe Krümmung.

Auf Grund seiner Materialzusammensetzung hat das als Band ausgebildete Antriebselement 19 eine gewisse Flexibilität. Diese Flexibilität erlaubt es dem Antriebselement 19, auf seiner Arbeitslänge A geradlinig zu verlaufen und dennoch auf der Aufwickelvorrichtung 23 aufgewickelt zu werden. Die Flexibilität erlaubt es dem Band 19 ferner, auf der Aufwickelvorrichtung 23 in flacher Form aufgewickelt zu werden, während es auf Grund der Konvexität der Rollen 24, 24' auf der vom Gehäuse 21 abgewandten Seite der Rollen in seiner Querrichtung q eine Krümmung erhält. Diese Krümmung des Bandes 19 wird dadurch unterstützt, dass der Montageort 34 des Bandes 19 am Vorrichtungskopf 16 diese Krümmung festlegt. Zu diesem Zweck kann der Montageort 34 am Vorrichtungskopf 16 beispielsweise als in Querrichtung q des Bandes gekrümmter Schlitz ausgebildet sein. Der Montageort 34 fluchtet in der in Fig. 2 gezeigten Draufsicht mit den Rollen 24, 24' und mit der Aufwickelvorrichtung 23.

Die spezielle Form des Antriebelementes 19 in diesem Ausführungsbeispiel hat eine Reihe von Vorteilen. Durch die Möglichkeit des flachen Aufwickelns auf der Aufwickelvorrichtung 23 benötigt das Antriebselement 19 in seiner aufgewickelten Form nur einen vergleichsweise kleinen Speicherraum. Die Krümmung des Bandes 19 in seiner Querrichtung q am Vorrichtungskopf 16 hingegen verleiht dem Band 19 eine enorme Richtungsstabilität. Dabei hat das Band 19 eine hohe Richtungsstabilität nicht nur in seiner Querrichtung q, d.h. gegenüber seitlichen Richtungsabweichungen, sondern auch in Vertikalrichtung, d.h. senkrecht sowohl zur Verlagerungsrichtung R, als auch zur Querrichtung q. Diese Richtungsstabilität erlaubt es, das Antriebselement 19 auch über sehr weite Arbeitslängen A gegenüber der Befestigungseinrichtung 22 auszufahren, ohne dass der Kopf 16 der Vorrichtung 1 nennenswert von der Richtung R bzw. -R abweicht. Folglich können über diese Entfernungen Waren 2 sehr präzise verlagert werden. Gleichzeitig kann das Verlagern sehr schnell durchgeführt werden, weil das als Band ausgebildete Antriebselement 19 gegenüber einer Stange oder der herkömmlich bekannten Energiekette nur eine sehr geringe Masse aufweist und daher schnell beschleunigt und abgebremst werden kann.

Als Fixierelement 17 zum temporären Fixieren einer Ware 2 sind am Vorrichtungskopf 16 Saugnäpfe 18 mit entsprechenden Saugöffnungen vorgesehen. Über einen Verteiler 35 stehen diese Saugöffnungen 18 in Fluidverbindung mit einer Luftleitung 36. An einem ersten Ende ist die Luftleitung 36 an den Vorrichtungskopf 16 angeschlossen. An ihrem zweiten Ende ist die Luftleitung 36 auf eine für sie vorgesehene Aufwickeltrommel 37 aufgewickelt, die ebenfalls im Gehäuse 21 der Vorrichtung 1 vorgesehen ist. Um aufgewickelt werden zu können, ist die Luftleitung 36 aus einem flexiblen (Kunststoff-) Material ausgebildet. Ihr an der Aufwickeltrommel 37 befestigtes Ende ist mit einem (nicht dargestellten) Ansaugelement verbunden, beispielsweise einer Ansaugpumpe. Über diese Pumpe kann die Luft in der Luftleitung 36 angesaugt werden. Dabei bildet sich vor den Saugöffnungen 18 ein Unterdruck, der eine vor den Saugöffnungen 18 befindliche Ware ansaugt und auf diese Weise temporär vor dem Vorrichtungskopf 16 fixieren bzw. festhalten kann.

Die Aufwickeltrommel 37 kann mit einer leichten Vorspannung in Aufwickelrichtung versehen sein. Dadurch kann sie die Luftleitung 36 stets soweit wie möglich aufwickeln. Wird der Vorrichtungskopf 16 mittels des Antriebes 20 in Richtung R bewegt, so nimmt der Vorrichtungskopf 16 wegen seiner Befestigung gegenüber der Luftleitung 36 das vordere Ende der Luftleitung 36 mit. Die Luftleitung 36 wickelt sich dabei gegen leichte Vorspannung der Aufwickeltrommel 37 von letzterer ab. Wird der Vorrichtungskopf 16 hingegen in Richtung -R zurückgefahren, so wickelt die Aufwickeltrommel 37 eine überschüssige Länge der Luftleitung 36 auf.

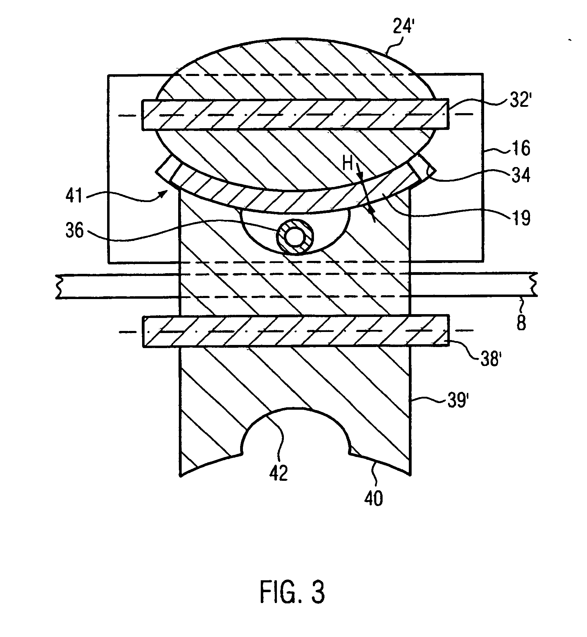

Fig. 3 zeigt einen Vertikalschnitt durch die erfindungsgemäße Verlagerungsvorrichtung 1 an der in Fig. 2 mit III-III bezeichneten Stelle. Dieser Vertikalschnitt erfolgt somit durch das Zentrum der hier nur schematisch dargestellten Drehachse 32' der zweiten Rolle 24'. Abgesehen vom Vorhandensein des Antriebs 20 wäre die Ansicht an der ersten Rolle 24 jedoch genau die gleiche.

In einer gemeinsamen vertikalen Ebene mit der Drehachse 32' der zweiten Rolle 24' und parallel dazu liegt die Drehachse 38' einer Gegenrolle 39. Diese Gegenrolle 39' ist der zweiten Rolle 24' zugeordnet. Eine entsprechende Gegenrolle 39 ist auch der ersten-Rolle 24 zugeordnet.

Die Gegenrolle 39' hat eine konkav gekrümmte Oberfläche 40. Der Krümmungsradius dieser konkaven Oberfläche 40 entspricht etwa dem Krümmungsradius der konvexen Oberfläche der Rolle 24'. Die Rolle 24 und die Gegenrolle 39' sind so dimensioniert und auf Grund der Lage ihrer Drehachsen 32', 38' so voneinander beabstandet, dass sie durch einen Spalt 41 voneinander beabstandet sind. Dieser Spalt 41 hat eine Höhe H, die an die Höhe H des als flexibles Band ausgebildeten Antriebselementes 19. Das Band 19 ist in dem Spalt 41 zwischen der Rolle 24' und der Gegenrolle 39' geführt. Auf Grund der Konvexität bzw. Konkavität der Rolle bzw. der Gegenrolle nimmt das Band 19 in seiner Querrichtung eine Krümmung an. Der Montageort 34 des Antriebselementes 19 am Vorrichtungskopf 16 besteht aus einem entsprechend gekrümmten Schlitz, in dem das vordere Ende des Bandes 19 aufgenommen und befestigt ist.

In der konkaven Oberfläche 40 der Gegenrolle 39' befindet sich zentral eine Nut 42. In dieser Nut wird unterhalb des Antriebselementes 19 die flexible Luftleitung 36 geführt. Sie ist vom Antriebselement 19 getrennt, damit beide auf unterschiedliche Aufwickelvorrichtungen 23, 37 aufgewickelt werden können. Das vordere Ende der Luftleitung 36 ist ebenfalls am Vorrichtungskopf 16 befestigt. Der Vorrichtungskopf 16 wird knapp oberhalb der Platte des Schwenktisches 8 geführt.

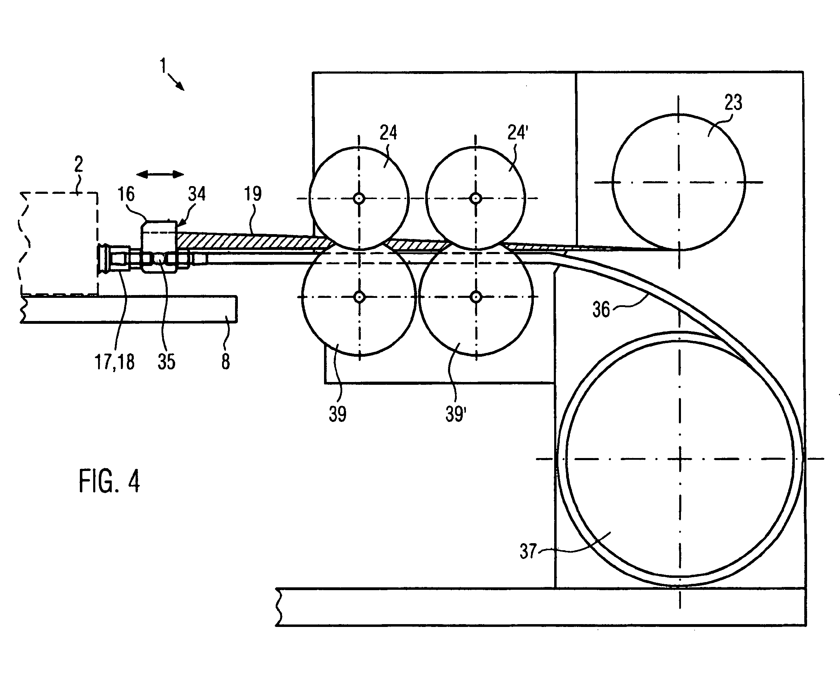

Fig. 4 zeigt die wichtigsten Komponenten der erfindungsgemäßen Verlagerungsvorrichtung 1 in (schematischer) Seitenansicht. Hier ist zu sehen, wie das als Band ausgebildete Antriebselement 19 von der Aufwickelvorrichtung 23 zwischen zwei einander zugeordneten Paaren von Rolle (24, 24') und Gegenrolle (39, 39') zu seinem Montageort 34 am Vorrichtungskopf 16 geführt wird. Während das Band 19 flach auf die Aufwickelvorrichtung 23 aufgewickelt ist, nimmt seine Krümmung auf Grund der Konvexität der Rollen 24, 24' bis zu seinem Montageort 34 am Vorrichtungskopf 16 kontinuierlich zu. Denkbar wäre es auch, dass die Krümmung des Bandes 19 nur bis zur Rolle 24' zunimmt und das Band von dort über die erste Rolle 24 mit nahezu konstanter Krümmung bis an den Vorrichtungskopf 16 geführt wird.

Unterhalb des Bandes 19 befindet sich die Luftleitung 36, die auf eine Aufwickeltrommel 37 aufgewickelt ist. Die Luftleitung 36 erstreckt sich durch die Nuten 42 in den Gegenrollen 39, 39'. Ein vorderes Ende der Luftleitung 36 ist am Vorrichtungskopf 16 befestigt. Über einen Verteiler 35 steht die Luftleitung 36 dort in Wirkverbindung mit mehreren Saugnäpfen 18, die zusammen ein Fixierelement 17 zum temporären Fixieren einer Ware 2 darstellen. Die vorderen Ränder der Saugnäpfe 18 liegen in einer gemeinsamen Ebene, so dass sie eine ebene Anlagefläche zum Anlagern einer Ware 2 darbieten.

Ausgehend von dem dargestellten Ausführungsbeispiel kann die erfindungsgemäße Vorrichtung in vielfacher Hinsicht verändert werden. Beispielsweise ist es nicht notwendig, dass das Antriebselement 19 über seine gesamte Länge gleichförmig ausgebildet ist. Vielmehr könnte es in einigen Abschnitten auch starr ausgebildet sein, solange es in den zwischenliegenden Abschnitten flexibel ausgebildet ist, um ein Aufwickeln zu ermöglichen. Das Antriebselement 19 und die Luftleitung 36 müssen nicht vollständig getrennt bis zum Vorrichtungskopf 16 verlaufen. Denkbar wäre es, dass sie an einem oder mehreren Verbindungspunkten auch schon vor dem Vorrichtungskopf 16 miteinander verbunden sind. Im Übrigen ist es nicht notwendig, dass als Fixierelement 17 zum temporären Fixieren der Ware 2 vor dem Vorrichtungskopf 16 eine Ansaugeinrichtung vorgesehen ist. Stattdessen oder auch zusätzlich könnte am Vorrichtungskopf 16 auch eine Einrichtung zum mechanischen Ergreifen der Ware 2 vorgesehen sein. Eine weitere Variante der Vorrichtung 1 bestünde darin, sie anstelle der zweiten Verlagerungseinrichtung 26 vorzusehen. An geeigneten Stellen der Vorrichtung 1 können Sensoren vorgesehen sein, um stets die aktuelle Position des Vorrichtungskopfes 16 ermitteln zu können. Dies erlaubt Rückschlüsse auf die Lage der Waren 2 und ermöglicht eine präzise Erfassung der Positionen, an denen Waren 2 abgelegt worden sind. Die Rollen 24 und die Gegenrollen 39 müssen nicht konvex bzw. konkav gekrümmte Oberflächen aufweisen, sondern diese Oberflächen könnten auch flach ausgebildet sein.

## Patentansprüche

1. Vorrichtung (1) zum Verlagern von Waren (2), mit einem Vorrichtungskopf (16), an dem mindestens ein Fixierelement (17) zum temporären Fixieren einer Ware (2) relativ zum Vorrichtungskopf (16) vorgesehen ist, sowie mit einem Antrieb (20) zum Bewegen des Vorrichtungskopfes (16),
wobei der Vorrichtungskopf (16) verbunden ist mit einem gelenklosen Antriebselement (19), das zumindest abschnittsweise flexibel ist,
und wobei das Antriebselement (19) zwischen mindestens einer Rolle (24, 24') und einer ihr zugeordneten Gegenrolle (39, 39') geführt ist,
**dadurch gekennzeichnet,**
**dass** sich eine Nut (42) zentral in einer Oberfläche der Gegenrolle (39, 39') befindet, wobei eine Luftleitung (36) in der Nut (42) führbar ist.

2. Vorrichtung nach Anspruch 1, **dadurch gekennzeichnet, dass** das Antriebselement (19) an einer Befestigungseinrichtung (22) befestigt ist, und dass eine Arbeitslänge (A) des Antriebselements (19) zwischen der Befestigungseinrichtung (22) und dem Vorrichtungskopf (16) verkürzbar und/oder verlängerbar ist.

3. Vorrichtung nach einem der vorangehenden Ansprüche, **dadurch gekennzeichnet, dass** das Antriebselement (19) ein flexibles Band ist.

4. Vorrichtung nach Anspruch 3, **dadurch gekennzeichnet, dass** das flexible Band (19) ein Metallband ist.

5. Vorrichtung nach einem der Ansprüche 3 oder 4, **dadurch gekennzeichnet, dass** das flexible Band (19) ein Stahlband ist.

6. Vorrichtung nach einem der Ansprüche 3 bis 5, **dadurch gekennzeichnet, dass** das flexible Band (19) weniger hoch als breit ist.

7. Vorrichtung nach Anspruch 2, **dadurch gekennzeichnet, dass** die Befestigungseinrichtung (22) eine Aufwickelvorrichtung (23) für das Antriebselement (19) umfasst.

8. Vorrichtung nach einem der Ansprüche 3 bis 6, **dadurch gekennzeichnet, dass** das Band (19) an seinem Montageort am Vorrichtungskopf (16) in seiner Querrichtung (q) gekrümmt ist.

9. Vorrichtung nach einem der vorangehenden Ansprüche, **dadurch gekennzeichnet, dass** die Rolle (24, 24') konvex und Gegenrolle (39, 39') konkav ist.

10. Vorrichtung nach einem der vorangehenden Ansprüche, **dadurch gekennzeichnet, dass** in Längsrichtung des Antriebselementes (19) nacheinander zwei Rollen (24, 24') mit je einer zugeordneten Gegenrolle (39, 39') vorgesehen sind.

11. Vorrichtung nach Anspruch 10, **dadurch gekennzeichnet, dass** die Bewegung mindestens einer Rolle (24) und einer weiteren Rolle (24') und/oder einer Gegenrolle (39, 39') miteinander gekoppelt ist.

12. Vorrichtung nach einem der Vorangehendem, Ansprüche, **dadurch gekennzeichnet, dass** wenigstens eine Rolle (24) und/oder eine Gegenrolle (39) mit einem in zwei Richtungen betreibbaren Antrieb (20) versehen ist.

13. Vorrichtung nach einem der Vorangehender Ansprüche, **dadurch gekennzeichnet, dass** die Rolle (24, 24') und/oder die Gegenrolle (39, 39') eine Oberfläche aus einem Haftreibung zwischen der Rolle oder Gegenrolle und dem Antriebselement (19) hervorrufenden Material aufweist, insbesondere aus Gummi.

14. Vorrichtung nach einem der vorangehenden Ansprüche, **dadurch gekennzeichnet, dass** der Vorrichtungskopf (16) eine ebene oder konkave Anlagefläche für das Anlegen einer Ware (2) aufweist.

15. Vorrichtung nach einem der vorangehenden Ansprüche, **dadurch gekennzeichnet, dass** als Fixierelement (17) am Vorrichtungskopf (16) mindestens eine Saugöffnung (18) vorgesehen ist, und dass die Vorrichtung (1) eine Ansaugeinrichtung und die Luftleitung (36) zwischen der Ansaugeinrichtung und dem Vorrichtungskopf (16) aufweist.

16. Vorrichtung nach einem der vorangehenden Ansprüche, **dadurch gekennzeichnet, dass** am Vorrichtungskopf (16) mehrere Saugöffnungen (18) vorgesehen sind.

17. Vorrichtung nach einem der vorangehenden Ansprüche, **dadurch gekennzeichnet, dass** mehrere Saugöffnungen (18) in Form von über den Vorrichtungskopf (16) hinaus vorstehenden Saugnäpfen vorgesehen sind.

18. Vorrichtung nach Anspruch 17, **dadurch gekennzeichnet, dass** die Ränder der Saugnäpfe (18) in einer gemeinsamen Ebene liegen.

19. Vorrichtung nach einem der vorangehenden Ansprüche, **dadurch gekennzeichnet, dass** ein Ende der Luftleitung (36) mit dem Vorrichtungskopf (16) verbunden ist und an dessen Bewegung gekoppelt ist.

20. Vorrichtung nach einem der Ansprüche 15 bis 19, **dadurch gekennzeichnet, dass** die Luftleitung (36) flexibel ist.

## Claims

1. Device (1) for displacing articles (2), with a device head (16), on which at least one fixing element (17) is provided for temporarily fixing an article (2) relative to the device head (16), and with a drive (20) for moving the device head (16),
wherein the device head (16) is connected to an unarticulated drive element (19), which is at least sectionally flexible,
and wherein the drive element (19) is guided between at least one roller (24, 24') and one counter roller (39, 39') associated with the latter,
**characterised in that**
a groove (42) is located centrally in a surface of the counter roller (39, 39'), wherein an air pipe (36) can be guided in the groove (42).

2. Device according to Claim 1, **characterised in that** the drive element (19) is fastened to a fastening assembly (22), and **in that** a working length (A) of the drive element (19) between the fastening assembly (22) and the device head (16) can be shortened and/or lengthened.

3. Device according to any one of the preceding claims, **characterised in that** the drive element (19) is a flexible strip.

4. Device according to Claim 3, **characterised in that** the flexible strip (19) is a metal strip.

5. Device according to any one of Claims 3 or 4, **characterised in that** the flexible strip (19) is a steel strip.

6. Device according to any one of Claims 3 to 5, **characterised in that** the height of the flexible strip (19) is less than its width.

7. Device according to Claim 2, **characterised in that** the fastening assembly (22) comprises a winding device (23) for the drive element (19).

8. Device according to any one of Claims 3 to 6, **characterised in that** the strip (19) is curved in its transverse direction (q) at its site of installation on the device head (16).

9. Device according to any one of the preceding claims, **characterised in that** the roller (24, 24') is convex and counter roller (39, 39') is concave.

10. Device according to any one of the preceding claims, **characterised in that** in the longitudinal direction of the drive element (19) two rollers (24, 24') are provided consecutively, each with an associated counter roller (39, 39').

11. Device according to Claim 10, **characterised in that** the movements of at least one roller (24) and of a further roller (24') and/or of a counter roller (39, 39') are coupled to one another.

12. Device according to any one of the preceding claims, **characterised in that** at least one roller (24) and/or a counter roller (39) is provided with a drive (20) that can be operated in two directions.

13. Device according to any one of the preceding claims, **characterised in that** the roller (24, 24') and/or the counter roller (39, 39') has a surface made of a material causing static friction between the roller or counter roller and the drive element (19), in particular made of rubber.

14. Device according to any one of the preceding claims, **characterised in that** the device head (16) has a planar or concave contact surface for the placement of an article (2).

15. Device according to any one of the preceding claims, **characterised in that** at least one suction opening (18) is provided as fixing element (17) on the device head (16), and **in that** the device (1) has a suction device and the air pipe (36) between the suction device and the device head (16).

16. Device according to any one of the preceding claims, **characterised in that** a plurality of suction openings (18) are provided on the device head (16).

17. Device according to any one of the preceding claims, **characterised in that** a plurality of suction openings (18) are provided in the form of suckers protruding beyond the device head (16).

18. Device according to Claim 17, **characterised in that** the edges of the suckers (18) lie in a common plane.

19. Device according to any one of the preceding claims, **characterised in that** the end of the air pipe (36) is connected to the device head (16) and is coupled to the movement thereof.

20. Device according to any one of Claims 15 to 19, **characterised in that** the air pipe (36) is flexible.

## Revendications

1. Dispositif (1) pour le transfert d'articles (2), avec une tête de dispositif (16) sur laquelle est prévu au moins un élément de fixation (17) pour la fixation temporaire d'un article (2) par rapport à la tête de dispositif (16), et avec un entraînement (20) pour déplacer la tête de dispositif (16),
étant précisé que la tête de dispositif (16) est reliée à un élément d'entraînement non articulé (19) qui est flexible au moins par zones,
et que l'élément d'entraînement (19) est guidé entre au moins un galet (24, 24') et un galet opposé (39, 39') associé à celui-ci,
**caractérisé en ce qu'**une rainure (42) se trouve au milieu d'une surface du galet opposé (39, 39'), une conduite d'air (36) étant apte à passer dans la rainure (42).

2. Dispositif selon la revendication 1, **caractérisé en ce que** l'élément d'entraînement (19) est fixé dans un dispositif de fixation (22), et **en ce qu'**une longueur de travail (A) de l'élément d'entraînement (19) entre le dispositif de fixation (22) et la tête de dispositif (16) est apte à être raccourcie et/ou allongée.

3. Dispositif selon l'une des revendications précédentes, **caractérisé en ce que** l'élément d'entraînement (19) est constitué par une courroie flexible.

4. Dispositif selon la revendication 3, **caractérisé en ce que** la courroie flexible (19) est constituée par une courroie métallique.

5. Dispositif selon l'une des revendications 3 ou 4, **caractérisé en ce que** la courroie flexible (19) est constituée par une courroie en acier.

6. Dispositif selon l'une des revendications 3 à 5, **caractérisé en ce que** la courroie flexible (19) est moins haute que large.

7. Dispositif selon la revendication 2, **caractérisé en ce que** le dispositif de fixation (22) comprend un dispositif d'enroulement (23) pour l'élément d'entraînement (19).

8. Dispositif selon l'une des revendications 3 à 6, **caractérisé en ce que** la courroie (19), à l'endroit de son montage sur la tête de dispositif (16), est courbe dans son sens transversal (q).

9. Dispositif selon l'une des revendications précédentes, **caractérisé en ce que** le galet (24, 24') est convexe et le galet opposé (39, 39') est concave.

10. Dispositif selon l'une des revendications précédentes, **caractérisé en ce qu'**il est prévu l'un derrière l'autre dans le sens longitudinal de l'élément d'entraînement (19), deux galets (24, 24') avec chacun un galet opposé (39, 39') associé.

11. Dispositif selon la revendication 10, **caractérisé en ce que** les mouvements d'au moins un galet (24) et d'un autre galet (24') et/ou d'un galet opposé (39, 39') sont accouplés.

12. Dispositif selon l'une des revendications précédentes, **caractérisé en ce qu'**au moins un galet (24) et/ou un galet opposé (39) sont pourvus d'un entraînement (20) apte à fonctionner dans deux directions.

13. Dispositif selon l'une des revendications précédentes, **caractérisé en ce que** le galet (24, 24') et/ou le galet opposé (39, 39') présentent une surface composée d'un matériau, en particulier en caoutchouc, qui provoque une friction entre le galet ou le galet opposé et l'élément d'entraînement (19).

14. Dispositif selon l'une des revendications précédentes, **caractérisé en ce que** la tête de dispositif (16) présente une surface d'application plane ou concave pour l'application d'un article (2).

15. Dispositif selon l'une des revendications précédentes, **caractérisé en ce qu'**il est prévu comme élément de fixation (17) sur la tête de dispositif (16) au moins une ouverture d'aspiration (18), et **en ce que** le dispositif (1) comporte un dispositif d'aspiration ainsi que la conduite d'air (36) entre le dispositif d'aspiration et la tête de dispositif (16).

16. Dispositif selon l'une des revendications précédentes, **caractérisé en ce qu'**il est prévu sur la tête de dispositif (16) plusieurs ouvertures d'aspiration (18).

17. Dispositif selon l'une des revendications précédentes, **caractérisé en ce que** plusieurs ouvertures d'aspiration (18) sont prévues sous la forme de ventouses qui dépassent de la tête de dispositif (16) .

18. Dispositif selon la revendication 17, **caractérisé en ce que** les bords des ventouses (18) sont situés dans un plan commun.

19. Dispositif selon l'une des revendications précédentes, **caractérisé en ce qu'**une extrémité de la conduite d'air (36) est reliée à la tête de dispositif (16) et est couplée au déplacement de celle-ci.

20. Dispositif selon l'une des revendications 15 à 19, **caractérisé en ce que** la conduite d'air (36) est flexible.
